(19) Europäisches Patentamt
European Patent Office
Office européen des brevets

(11) **EP 4 451 530 A1**

(12) **EUROPEAN PATENT APPLICATION**

(43) Date of publication:
**23.10.2024   Bulletin 2024/43**

(21) Application number: **23168626.2**

(22) Date of filing: **19.04.2023**

(51) International Patent Classification (IPC):
*H02M 1/00* $^{(2006.01)}$         *H02M 1/32* $^{(2007.01)}$
*H02M 7/487* $^{(2007.01)}$     *H02M 7/49* $^{(2007.01)}$
*H02M 7/5395* $^{(2006.01)}$   *H02M 1/12* $^{(2006.01)}$

(52) Cooperative Patent Classification (CPC):
**H02M 1/325; H02M 1/007; H02M 7/487;**
**H02M 7/49; H02M 7/5395;** H02M 1/0095;
H02M 1/12; H02M 7/4835

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **SCHWEIZER, Mario**
**5406 Rütihof (CH)**
• **KIEFERNDORF, Frederick**
**5400 Baden (CH)**
• **TSOUMAS, Ioannis**
**8032 Zürich (CH)**

(74) Representative: **Sykora & König Patentanwälte**
**PartG mbB**
**Maximilianstraße 2**
**80539 München (DE)**

(54) **METHOD AND COMPUTER PROGRAM FOR CONTROLLING AN ELECTRICAL CONVERTER, CONTROLLER FOR CONTROLLING AN ELECTRICAL CONVERTER, ELECTRICAL CONVERTER, AND COMPUTER-READABLE MEDIUM**

(57)    An electrical converter (10) and a method for controlling the electrical converter (10) are provided. The electrical converter (10) comprises: a main stage (12), with the main stage (12) being configured for converting a DC voltage into a three phase intermediate voltage and having three main outputs (24), one for each phase of the intermediate voltage; a filter cell stage (14) having three filter cells (30a, 30b, 30c) with each filter cell (30a, 30b, 30c) being coupled to a corresponding one of the three main outputs (24) and being configured for modifying the corresponding phase of the intermediate voltage; and three bypass switches (39) for bypassing the filter cells (30a, 30b, 30c), with each of the three bypass switches (39) being electrically coupled to a corresponding one of the three main outputs (24) and to a converter output (16) of the electrical converter (10), wherein the converter output (16) is coupled to the three filter cells (30a, 30b, 30c) and is configured for providing a three phase output voltage of the electrical converter (10). The method for controlling the electrical converter (10) comprises the steps of: determining a main stage pulse pattern (60) for the main stage (12), wherein the main stage pulse pattern (60) is determined depending on a voltage reference signal ($V_{ref,abc}$) for the output voltage and wherein the main stage pulse pattern (60) comprises switching instants for the main stage (12) over a next modulation period of the main stage (12); determining a cell pulse pattern for the filter cell stage (14), wherein the cell pulse pattern is determined from a cell output voltage reference signal (64), which is determined from the voltage reference signal ($V_{ref,abc}$) and a main stage voltage signal (62) determined from the main stage pulse pattern (60), and wherein the cell pulse pattern comprises switching instants for the three filter cells (30a, 30b, 30c) over the next modulation period; applying at least a next switching instant determined from the main stage pulse pattern (60) and the cell pulse pattern to the electrical converter (10), when all of the filter cells (30a, 30b, 30c) are working properly; applying at least a next switching instant determined from the main stage pulse pattern (60) and a modified cell pulse pattern (70) to the electrical converter (10), when one of the filter cells (30a, 30b, 30c) fails, wherein the failed filter cell (30a) is bypassed by activating the corresponding bypass switch (39), the modified cell pulse pattern (70) is determined under the assumption that a cell voltage provided by the failed filter cell (30a) is zero, and the intermediate voltage is modified by the two remaining filter cells (30b, 30c) depending on the modified cell pulse pattern (70) in order to provide the output voltage of the electrical converter (10).

EP 4 451 530 A1

**Fig. 1**

**Description**

FIELD OF THE INVENTION

The invention relates to the field of high-power converter control. In particular, the invention relates to a method, a computer program, a computer-readable medium and a controller for controlling an electrical converter. The invention also relates to the electrical converter.

BACKGROUND OF THE INVENTION

In particular in medium voltage applications, a cost-effective electrical converter topology with high power quality is given with the 3L(A)NPC+AF topology. Here, 3L means 3 level, (A)NPC means (active) neutral point clamped and AF means active filter. This topology has been proposed years ago and the corresponding electrical converter may comprise a main stage for providing a three-phase intermediate voltage and a filter stage comprising three AF cells for modifying the three phases of the intermediate voltage for providing an output voltage of the electrical converter. However, optimized hardware design, reliable control and failure-proof operation is still a challenge.

One of the main advantages of the topology are the small voltage steps that can be generated. The small voltage steps reduce the machine-side dv/dt and overvoltages, as well as the current total harmonic distortion and involved harmonic losses in the machine. The benefits come with additional hardware effort and more components hidden in the AF cells. There is a concern that the reliability of the total system may decrease compared to the 3L(A)NPC without active filter due to additional parts count, in particular when one of the AF cells fails.

A corresponding electrical converter, a controller for controlling the electrical converter, and a method for controlling the electrical converter are described in detail in the not yet published patent application EP 22 172 910.6.

To improve the robustness of the system, the filter stage may be equipped with a bypass switch, which may be activated in case that one of the AF cells has a failure. Ideally, the converter system can continue to operate despite the failure. So, all of the AF cells may be bypassed, and the electrical converter may be operated with the main stage of the electrical converter only. However, a power quality of the output voltage will be reduced considerably, and a switching frequency of the main stage would need to be increased by approximately a factor of 5 (from 150Hz to 450Hz) to reach an acceptable current total harmonic distortion, e.g. of less than 5%. However, the increased switching frequency of the main stage may lead to increased switching losses and consequently, a derating in the power capability needs to be applied. Initial calculations of the inventors of the present invention have shown that the power derating, depending on the configuration of the drive, can be up to 20%.

Alternatively, a number of AF cells per phase of the intermediate voltage may be higher than required such that a redundant number of AF cells may be installed in every phase. This case is common in MMC or cascaded H-Bridge topologies. If one cell is faulty and needs to be bypassed, there are still enough operational AF cells in the same phase that may be used to filter the corresponding phase of the intermediate voltage. These topologies are typically operated with phase-shifted carrier modulation. However, the modulation concept is not directly compatible with model predictive pulse pattern control (MP3C), a control scheme used for the 3L(A)NPC+AF topology, and the redundant AF cell increase the costs and the complexity of the electrical converter.

DESCRIPTION OF THE INVENTION

It is an objective of the invention to provide a method, a controller, and a computer program for controlling an electrical converter with a main stage and a filter stage having three filter cells, which may contribute to a high quality of an output voltage of the electrical converter, which may be compatible with MP3C, which may enable to keep a switching frequency of the main stage low, and/or which may enable to achieve a low current total harmonic distortion, in particular in case of a failure of one of the filter cells. Further, it is an objective of the invention to provide a computer-readable medium on which the computer program is stored.

These objectives are achieved by the subject-matter of the independent claims. Further exemplary embodiments are evident from the dependent claims and the following description.

An aspect of the invention relates to a method for controlling an electrical converter. The electrical converter comprises a main stage, with the main stage being configured for converting a DC voltage into a three phase intermediate voltage and having three main outputs, one for each phase of the intermediate voltage; a filter cell stage having three filter cells with each filter cell being coupled to a corresponding one of the three main outputs and being configured for modifying the corresponding phase of the intermediate voltage; and three bypass switches for bypassing the filter cells, with each of the three bypass switches being electrically coupled to a corresponding one of the three main outputs and to a cell output of the corresponding filter cell. The method comprises the steps of: determining a main stage pulse pattern for the main stage, wherein the main stage pulse pattern is determined depending on a voltage reference signal for the output voltage and wherein the main stage pulse pattern comprises switching instants for the main stage over a next modulation period of the main stage; determining a cell pulse pattern for the filter cell stage, wherein the cell pulse pattern is determined from a cell output voltage reference signal, which is determined from the voltage reference signal and a main stage voltage signal determined from the main stage pulse pattern, and wherein the cell pulse pattern comprises switching instants for the three filter cells over the next modulation period; applying at least a next switching instant determined from the main stage pulse pattern and the cell pulse pattern to the electrical converter, when all of the filter cells are working properly; applying at least a next switching instant determined from the main stage pulse pattern and a modified cell pulse pattern to the electrical converter, when one of the filter cells fails, wherein the failed filter cell is bypassed by activating the corresponding bypass switch, wherein the modified cell pulse pattern is determined under the assumption that a cell voltage provided by the failed filter cell is zero, and wherein the intermediate voltage is modified by the two remaining filter cells depending on the modified cell pulse pattern in order to provide the output voltage of the electrical converter.

So, in the case that one of the filter cells fails, the electrical converter is further operated with the two remaining filter cells. That the electrical converter is operated with the two remaining active filter cells may mean that the electrical converter is operated with the two remaining active filter cells only, i.e. no further filter cells are used for operating the electrical converter, e.g. no redundant filter cells.

The above method may contribute to a high quality of the output voltage of the electrical converter, may be compatible with MP3C, may enable to keep a switching frequency of the main stage low, and/or may enable to achieve a low current total harmonic distortion, in particular in case of the failure of one of the filter cells.

In particular, traditional control and modulation schemes (PWM, or MP3C) for the 3L(A)NPC+AF topology assume symmetry in the system, i.e. all three filter cells are operational. This is the case for PWM, where the best results are achieved with symmetric space vector equivalent modulation. In MP3C, optimal pulse patterns (OPPs) may be used that have been optimized offline for minimal current distortions assuming symmetry in the system. If the symmetry is broken, e.g. because one AF cell is bypassed, the normal switching sequences may lead to a very low output power quality and should not be used anymore. Under such asymmetric conditions, the way that the reference signals for the remaining filter cells are generated may be changed. The above method for controlling the electrical converter may be used to redistribute a total voltage error from three to two filter cells, as explained below. This redistribution is based on a mathematical transformation, as explained below. This method for controlling the electrical converter allows to fully utilize a compensation voltage in a stationary orthogonal reference frame that may be created with the remaining filter cells in two phases only. The mathematical transformation may ensure that the voltage error may be fully compensated. This may contribute to a high voltage quality. Consequently, the switching frequency of the main converter may be kept low and still a low total harmonic distortion of the current, e.g. of less than 5%, may be achieved.

Further, the above method for controlling the electrical converter may be made compatible with MP3C. In a nominal speed region, MP3C is using optimized pulse patterns (OPPs). Although it would theoretically be possible to compute OPPs for the specific asymmetric situation with a bypassed filter cell, another solution is presented herewith. After the failure in a filter cell has been detected and the faulty filter cell is bypassed, the control scheme may be switched from OPP based MP3C to carrier-based MP3C with error redistribution (ER-CB-MP3C). This may be done online because the only difference between the two schemes is the way that the pulse patterns and a flux reference trajectory may be calculated. With OPP-MP3C, the pulse patterns and the flux reference trajectory may be calculated offline and loaded into look-up tables during an operation of the electrical converter. With ER-CB-MP3C, the pulse patterns and the flux reference trajectory may be computed online for the next modulation period and stored in the corresponding look-up tables. The main control algorithm designated as MP3C core may take the corresponding pulse patterns and flux reference trajectory from these tables and may control the stator flux to follow the reference trajectory with online manipulations of the corresponding switching patterns.

Compared to other approaches that may be used to control the 3L(A)NPC+AF with a bypassed filter cell, the proposed method for controlling the electrical converter may have the following key advantages: improved reliability, as the converter can continue to operate in case an AF cell has a failure, thereby avoiding any down-time, and a service technician may replace the faulty filter cell in a scheduled maintenance window; improved power quality compared to operation with all filter cells being bypassed, because the operational remaining filter cells are used to increase the power quality, thereby keeping the current total harmonic distortion below a target of e.g. 5%; reduced power derating, because despite the operation with the failed filter cell, the switching frequency of the main converters needs to be increased only slightly, thereby keeping the losses low and the power derating below e.g. 10%; no redundant AF cells are required such that no additional hardware costs except for the cell bypass switches arise; the proposed control and modulation scheme is compatible with MP3C and no additional control scheme needs to be maintained as CB-MP3C is anyway foreseen for low-speed operation; seamless switch-over and uninterrupted operation is possible despite the filter cell failure.

The electrical converter may be a 3L-NPC-converter. The electrical converter may be provided for driving an electrical machine, in particular an electric motor, e.g. a three-phase motor, e.g. a three-phase induction motor. A mode in which all three filter cells are working properly may be referred to as "normal operation" of the electrical converter, whereas a mode in which one of the filter cells has failed may be referred to as "failure mode" of the electrical converter. The electrical converter may be a medium or high voltage converter adapted for processing voltages of more than 3 kV.

The main stage may comprise one or more NPC half-bridges, which are connected in parallel to a DC link. The output of the half-bridges may be the intermediate voltage, which may be a multi-phase, in particular three-phase voltage. Dependent on the topology of the main stage, the output voltage may have two, three, five or more voltage levels. In the case of 3L(A)NPC half-bridges, there may be three output voltage levels.

The filter cells may be active filter cells. In this context, the term "active" in the expression "active filter cells" is a part of the name of the corresponding filter cells, defines the type of the corresponding filter cells, and is not representative for the corresponding filter cell being active or not. So, an active filter cell may be active or not, wherein the filter cell may have failed in the latter case. That the two filter cells are "remaining" means in this context that they have not failed and that they are further active. Each filter cell may comprise a cell capacitor providing a cell voltage of the corresponding filter cell, wherein the cell capacitor is connected in parallel with two half-bridges of the corresponding filter cell, with two half-bridges providing a cell input and a cell output of the corresponding filter cell. The filter cell stage may be seen as an active filter of the electrical converter. The bypass switches may be arranged in parallel to the corresponding filter cells.

The method may comprise a pattern determination part for determining the main stage pulse pattern for the main stage, e.g. with pulse width modulation, and for determining a cell pulse pattern for the filter stage, e.g. with pulse width modulation, e.g. as described in the above referenced unpublished patent application EP 22 172 910.6. Each pulse pattern may comprise one or more sequences of switching instants over a specific time interval, the modulation period. A switching instant may indicate a time point and/or transition time and switch positions to be switched to at the time point.

The main stage pulse pattern may be determined from the voltage reference signal for the output voltage, which may be provided by an outer control loop. The cell pulse pattern may be determined from the difference of the voltage reference signal and a main stage voltage signal. The main stage voltage signal may be determined from the main stage pulse pattern by determining an output voltage level generated by the main stage pulse pattern over time.

From the main stage pulse pattern and the cell pulse pattern, a flux reference trajectory may be determined, e.g. as described in the above referenced unpublished patent application EP 22 172 910.6. In particular, this may be done by integrating the sum of the intermediate voltage of the main stage as indicated by the main stage pulse pattern and the filter cell output voltage of the filter cell stage as indicated by the cell pulse pattern. Optionally, the cell pulse pattern may be adjusted before determining the flux reference trajectory, e.g. as described in the above referenced unpublished patent application EP 22 172 910.6 in context with the adjuster of the pattern determination part.

It has to be noted that the main stage pulse pattern and the cell pulse pattern may be multi-phase quantities, i.e. there may be switching instants for every phase. Also, the flux reference trajectory may be a vector quantity, for example with a component of each phase, or e.g., with two components in an orthogonal reference frame.

Finally, the pulse patterns and the flux reference trajectory may be written into look-up tables and passed to the model predictive control part. The model predictive control part ensures closed loop control by tracking of the provided flux reference trajectory with onlinemodifications of the provided pulse patterns.

Optionally, one or more differential mode components of a balancing voltage of the filter cells, which is determined from measurements in the filter cells, may be determined and the corresponding differential mode component(s) of the balancing voltage may be subtracted from the voltage reference signal before the main stage pulse pattern is determined. For the balancing voltage, the cell voltages and/or capacitor voltages of the filter cells may be measured to generate a corresponding cell voltage signal. Each phase of the balancing voltage corresponding to one of the filter cells may be based on an average of a difference of a measured cell voltage signal of the filter cell and a reference cell voltage of the corresponding filter cell. The measured cell voltage signals may be filtered with a low pass filter to reduce ripple and/or a cell voltage reference may be subtracted. The balancing voltage of a filter cell may be an average of the thus processed cell voltage signal. A common mode signal, i.e. the sum of the phase components of the balancing voltage, may then be subtracted from the balancing voltage of a filter cell to determine the differential mode component(s). Similarly, the cell pulse pattern may be determined from cell output voltage reference signal. The cell output voltage reference signal is a difference of the compensated voltage reference signal, which is the difference of the voltage reference signal and the differential mode component(s) of the balancing voltage of the cells, and a differential mode signal of the main stage voltage signal determined from the main stage pulse pattern. In such a way, the differential mode component(s) of the balancing voltage of the filter cells, which has been subtracted from the voltage reference signal for determining the main stage pulse pattern, can be compensated.

According to an embodiment, the cell pulse pattern for the filter cell stage is determined from the cell output voltage reference signal by distributing the cell output voltage reference signal to the three filter cells, when all three filter cells are working properly, and the modified cell pulse pattern for the filter cell stage is determined from the cell output voltage reference signal by distributing the cell output voltage reference signal to the two remaining filter cells, when the filter cell fails.

According to an embodiment, the cell output voltage reference signal is distributed to the two remaining filter cells by determining, under the assumption that all three filter cells work properly, three reference cell output voltages to be provided by the corresponding filter cells depending on the cell output voltage reference signal, wherein the three reference cell output voltages are determined in the form of a three-dimensional vector; determining two auxiliary reference cell output voltages for the two remaining filter cells depending on the reference cell output voltages by transforming the three-dimensional vector into a two-dimensional auxiliary vector, wherein the components of the two-dimensional auxiliary vector correspond to the two auxiliary reference cell output voltages; determining a back-transformation matrix by back-transforming the auxiliary vector under the assumption that a cell output voltage of the failed filter cell is zero; determining two redistributed reference cell output voltages depending on the back-transformation matrix and the two auxiliary reference cell output voltages; and determining the modified cell pulse pattern depending on the redistributed reference cell output voltages. This transformation may be referred to as Clark-Transformation. The two redistributed reference cell output voltages may be determined in form of a two-dimensional redistributed vector. The back-transformation matrix may be a reduced back-transformation matrix.

According to an embodiment, the three-dimensional vector is determined in an abc-frame. Alternatively or additionally, the two-dimension auxiliary vector may be determined in an $\alpha\beta$-frame. Alternatively or additionally, the redistributed reference cell output voltages may be determined in form of a two-dimensional redistributed vector and the redistributed vector is provided in the $\alpha\beta$-frame. Alternatively, the auxiliary vector and/or the redistributed vector may be provided in a dq-frame. The $\alpha\beta$-frame may be stationary and/or orthogonal.

According to an embodiment, the main stage and/or the filter cells are operated in accordance with an OPP-based MP3C modulation scheme, a carrier-based MP3C modulation scheme, or a PWM modulation scheme, when all three filter cells work properly.

The OPP-based MP3C modulation scheme may be used at medium to high speed of the electrical machine, whereas the carrier-based MP3C modulation scheme may be used at a low speed of the electrical machine, both during normal operation of all three filter cells.

Alternatively or additionally, the main stage and/or the remaining filter cells may be operated in accordance with a carrier-based MP3C modulation scheme, when the filter cell has failed.

According to an embodiment, when all of the filter cells work properly, pulse patterns for the main stage and/or for the three filter cells are determined offline in advance and are loaded into one or more look-up tables during the operation of the electrical converter. Alternatively or additionally, when the filter cell has failed, the pulse patterns for the main stage and/or for the remaining filter cells may be determined online for the next modulation period only and may be loaded into the one or more look-up tables during the operation of the electrical converter. The next modulation period may be Tc or Tc/2. The pulse patterns each may consist of switching states and switching times for the three phases.

According to an embodiment, a switching frequency of the main stage is increased, when the filter cell has failed. The switching frequency may be referred to as target switching frequency. The switching frequency may be increased by a factor in the range of 1.5 to 5, e.g. in the range of 2 to 4, e.g. of about 3. The switching frequency may be increased e.g. from 50Hz to 250Hz, or from 150Hz to 250Hz.

According to an embodiment, an update rate for updating the look-up tables is reduced when the filter cell has failed.

According to an embodiment, the update rate is reduced to a modulation period of the main stage or to half the modulation period of the main stage.

Further aspects of the invention relate to a computer program for controlling an electrical converter, which, when being executed by a processor, is adapted to carry out the steps of the above method, and to a computer-readable medium, in which such a computer program is stored. Both the pattern determination part and the model predictive control part may be executed as software on one or more processors.

The computer-readable medium may be a floppy disk, a hard disk, an USB storage device, a RAM, a ROM, an EPROM or a FLASH memory. The computer-readable medium may also be a data communication network, e.g. the Internet, which allows downloading a program code. In general, the computer-readable medium may be a non-transitory or transitory medium.

A further aspect of the invention relates to a controller for controlling the electrical converter. The controller comprises at least one processor configured for carrying out the above method. The controller further comprises a memory which is communicatively coupled to the processor. The memory is configured for storing the main stage pulse pattern for controlling the main stage of the electrical converter, the cell pulse pattern for controlling the filter cell stage of the electrical converter, when all of the filter cells are working properly, and the modified cell pulse pattern for controlling the filter cell stage, when one of the filter cells fails. The controller may comprise a pattern determination controller for performing the steps in the pattern determination part of the method. The controller may comprise a model predictive controller for performing the steps in the model predictive control part of the method. The controller may comprise one or more further processors, in which the method may run as software. It also may be that the method is at least partially or completely implemented in hardware, such as a DSP or FPGA.

A further aspect of the invention relates to the electrical converter. The electrical converter comprises: the main stage being configured for converting the DC voltage into the three phase intermediate voltage and having the three main outputs, one for each phase of the intermediate voltage; the filter cell stage having the three filter cells with each filter cell being coupled to the corresponding one of the three main outputs and being configured for modifying the corresponding phase of the intermediate voltage; the three bypass switches for bypassing the filter cells, with each of the three bypass switches being electrically coupled to the corresponding one of the three main outputs and to a cell output of the corresponding filter cell.

In general, it has to be understood that features of the method as described in the above and in the following may be features of the computer program, the computer-readable medium, the controller and the electrical converter as described in the above and in the following, and vice versa.

These and other aspects of the invention will be apparent from and elucidated with reference to the embodiments described hereinafter.

BRIEF DESCRIPTION OF THE DRAWINGS

The subject-matter of the invention will be explained in more detail in the following text with reference to exemplary embodiments which are illustrated in the attached drawings.

Fig. 1 shows a schematic circuit diagram of an electrical converter according to an embodiment of the invention.

Fig. 2 shows a schematic high-level block diagram of a controller for controlling the electrical converter, according to an embodiment of the invention.

Fig. 3 shows a schematic medium-level block diagram of the controller for controlling the electrical converter, according to an embodiment of the invention.

Fig. 4 shows a schematic medium-level block diagram of another controller for controlling the electrical converter, according to an embodiment of the invention.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

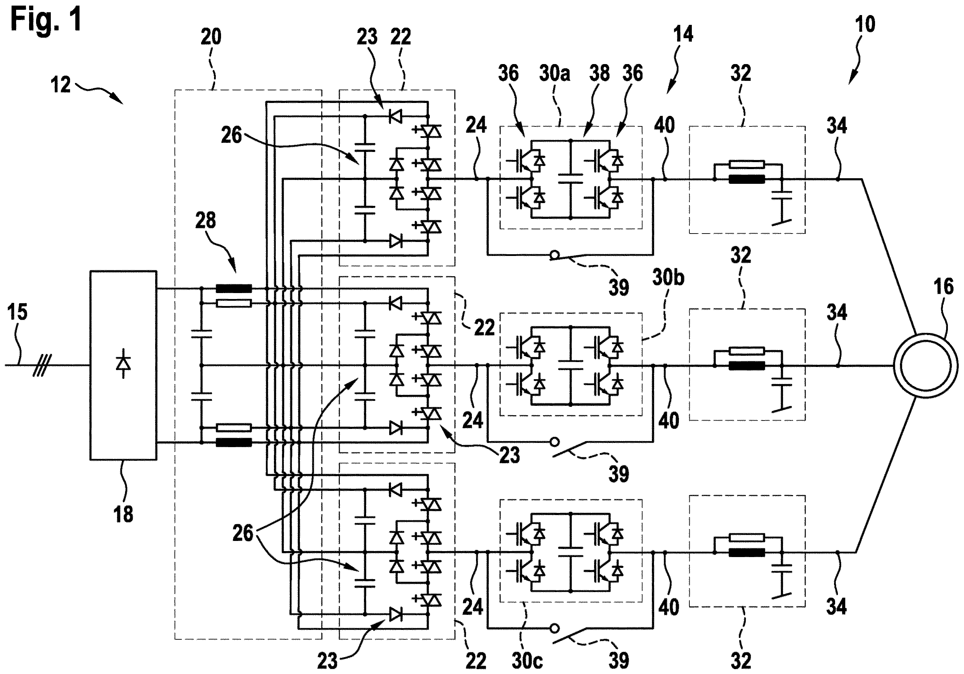

Fig. 1 shows an electrical converter 10 with a main stage 12 and a filter cell stage 14. The electrical converter 10 may be adapted for transforming a first AC voltage provided by a power grid 15 into an output voltage to be supplied to an electrical load 16.

The main stage 12 may comprise a rectifier 18, which may be a passive diode rectifier and which may be adapted for converting the AC voltage from the power grid 15 into a DC voltage, which is supplied to a main DC link 20. The main stage 12 may comprise three output converters 22, each of which being adapted for transforming the DC voltage in the DC link 20 into a corresponding phase of a three-phase intermediate voltage that may be provided at three corresponding main outputs 24 of the main stage 12. The output converters 22 may be connected in parallel to the DC link 20, for example via clamp inductors and/or resistors 28 or directly. Each of the output converters 22 may comprise a clamp circuit 26 and/or DC links 26, e.g. each with two capacitors. The DC links 20, 26 may be split DC links.

Each of the output converters 22 may comprise, a 3-level neutral point clamped (3LNPC) main half-bridge 23, which may be based on IGCTs, but other topologies and semiconductor types are possible. The main half-bridges 23 also may be ANPC half-bridges. Also, for the overall main stage 12, other topologies may be possible. In general, the main stage 12 may be adapted to provide a two- or multi-level intermediate voltage at the outputs 24, in particular with three phases. The main half-bridges 23 as shown in Fig. 1 may be adapted for generating three different voltage levels for the respective phases of the intermediate voltage.

The inductors 28 may provide an IGCT di/dt clamp circuit. In the case of other types of semiconductor switches, such as IGBTs, the inductors 28 may be omitted. The clamp circuits 26 may be used for controlling a device voltage during switching. The clamp circuits 26, normally used for IGCT switches, may or may not be omitted for other choices of semiconductor switches.

For every phase of the main stage 12, the filter cell stage 14 comprises one filter cell, in particular a first filter cell 30a, a second filter cell 30b, and a third filter cell 30c, and optionally one passive output filter 32, which are connected in series between the respective main output 24 of the main stage 12 and a converter output 34 of the electrical converter 10. The filter cell stage 14 may be seen as an active filter of the electrical converter 10.

Every filter cell 30a, 30b, 30c may comprise two cell half-bridges 36, which may be connected in parallel with a corresponding cell capacitor 38. A first midpoint of one of the cell half-bridges 36 may be connected to the corresponding main output 24 of the main stage 12. A second midpoint of the other one of the cell half-bridges 36 may provide a cell output 40 of the corresponding filter cell 30a, 30b, 30c and is connected via the corresponding optional passive filter 32 with the respective converter output 34 of the electrical converter 10.

Each of the filter cells 30a, 30b, 30c may comprise three different switching states, that may be reached by accordingly switching their semiconductor switches (two per half-bridge), which, for example, may be IGBTs. In a first switching state, the filter cells 30a, 30b, 30c may directly connect the corresponding main output 24 with the corresponding cell output 40. In a second switching state, the filter cells 30a, 30b, 30c may connect the corresponding cell capacitor 38 between the corresponding outputs 24, 40, such that the cell capacitor voltage of the corresponding cell capacitor 38 is added to the intermediate voltage provided at the corresponding main output 24. In a third switching state, the filter cells 30a, 30b, 30c may connect the corresponding cell capacitor 38 between the corresponding outputs 24, 40, such that the cell capacitor voltage of the corresponding cell capacitor 38 is subtracted from the intermediate voltage provided at the corresponding main output 24. In such a way, the intermediate voltage from the main stage 12, which usually is shaped like a step-function due to the finite number of levels of the main stage 12, may be converted into a voltage (i.e. the output voltage) which better approximates a sinusoidal and/or continuous output voltage reference.

Each of the passive filters 32 may comprise inductors, resistors and/or capacitors for electrical filtering the output voltage for even more damping higher order harmonics.

The filter stage 14 comprises three bypass switches 39 for bypassing the filter cells 30a, 30b, 30c, with each of the three bypass switches 39 being electrically coupled to a corresponding one of the three main outputs 24 and to the corresponding one of the cell outputs 40. So, every bypass switch 39 is configured for bypassing the corresponding filter cell 30a, 30b, 30c, in particular when the corresponding filter cell 30a, 30b, 30c fails. For example, in figure 1, the uppermost filter cell 30a has failed and is bypassed by the corresponding bypass switch 39 being closed.

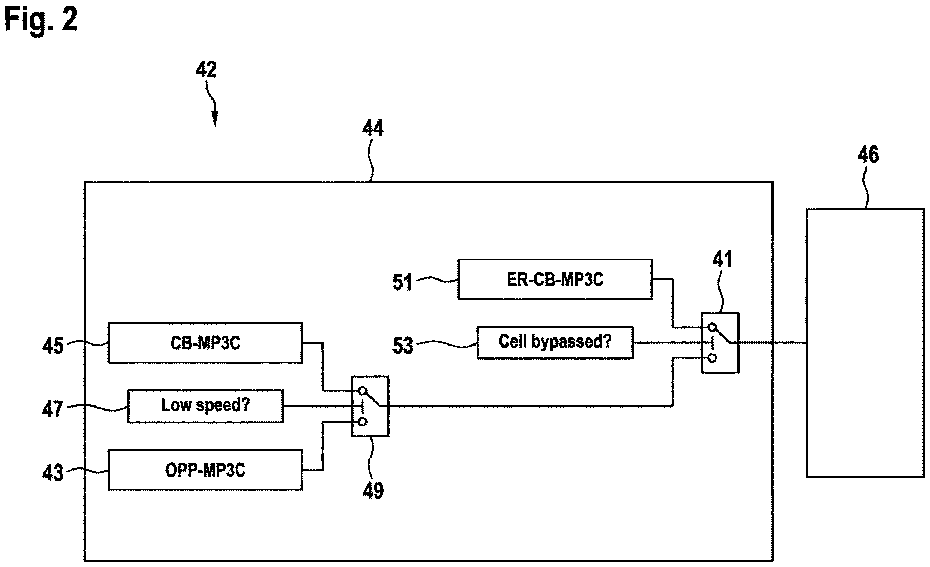

Fig. 2 shows a schematic high-level block diagram of a controller 42 for controlling the electrical converter 10, wherein the controller 42 may comprise a pattern determination controller 44 and a model predictive controller 46. The blocks of the controller 42 may also indicate method steps of a method for controlling the electrical converter 10, which may be carried out by the controller 42. The block of the pattern determination controller 44 also may be seen as the pattern determination part of the method for controlling the electrical converter 10. The block of the model predictive controller 46 also may be seen as the model predictive control part of the method for controlling the electrical converter 10.

During normal operation, i.e. in case of all filter cells 30a, 30b, 30c working properly, the pattern determination part 44 may be executed with a time period $T_c$ or $T_c/2$, whereas $T_c$ is the carrier period of the main stage 12 for an equivalent carrier-based PWM scheme. For example, when the main stage 12 uses a frequency of 300 Hz, the execution period could be 3.3 ms or 1.65 ms. In general, in MP3C, the type of normal operation mode depends on the electrical load, e.g. the speed of the corresponding electric machine. In case of operation with medium to high speed, typically an OPP-based MP3C modulation scheme (OPP-MP3C) 43 may be applied, whereas for operation with low speed, a carrier-based MP3C modulation scheme (CB-MP3C) 45 may be used. These modulation schemes are already known and described in detail in WO 2019 137 916 A1, WO 2017 013 125 A1, and in the not yet published patent applications EP 22 172 910.6 and EP 22 183 835.2. Whether the electrical machine runs at medium to high speed or at low speed may be determined by a first decision block 47 which may provide a corresponding input to a first switch 49. The first switch 49 may correspondingly switch from OPP-MP3C 43 to CB-MP3C 45 or vice versa.

After detection of the failure of the faulty filter cell 30a, the generation of the pulse patterns and the flux reference trajectory may be passed from the normal operation under OPP-MP3C 43 or CB-MP3C 45 over to an error redistribution carrier-based MP3C modulation scheme (ER-CB-MP3C) 51. Whether one of the filter cells 30a, 30b, 30c is faulty or not and/or has to be bypassed or not may be determined by a second decision block 53 which may provide a corresponding input to a second switch 41. The second switch 41 may correspondingly switch from the normal operation to the ER-CB-MP3C 51.

After switching to ER-CB-MP3C 51, the main converter target switching frequency may be optionally increased, e.g. from 50/150Hz to 250Hz, e.g. in order to achieve an acceptable current total harmonic distortion of, e.g., less than 5%.

Within ER-CB-MP3C 51, the pulse patterns for the main stage 12 and the remaining filter cells 30b, 30c may be calculated online for the next modulation period $T_c$ or $T_c/2$. Finally, the reference trajectory may be created online with the actual combined pulse patterns of the three phases, considering the bypassed filter cell 30a as well as the operational remaining filter cells 30b, 30c.

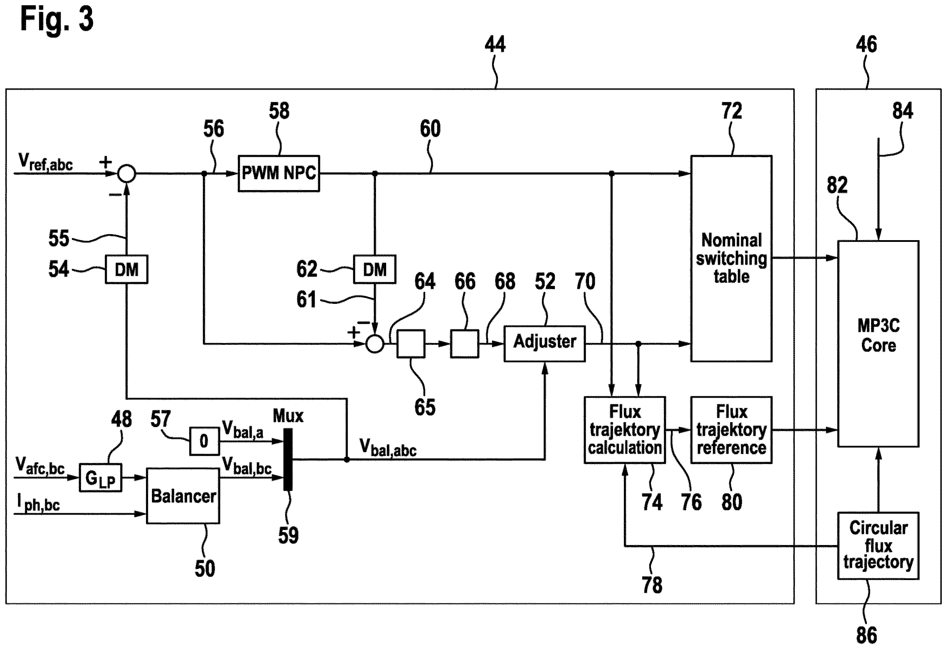

If the pulse pattern and reference trajectory are available for the next modulation period $T_c$ or $T_c/2$, they may be stored in lookup tables and may be passed to an MP3C core 82 (see figure 3) of the model predictive controller 46. The MP3C core 82 may finally control a stator flux of the electrical machine to follow the flux reference trajectory by manipulating the switching instants of the pulse patterns.

The ER-CB-MP3C 51 may be executed with a reduced update rate, e.g. with the modulation period of the main stage 12 or half the modulation period. Because the device switching frequency may be increased to 250Hz, the modulation period and the respective update period may be around $T_c = 1/500\,Hz = 2\,ms$. This may leave enough computational resources for other control tasks, such as an MP3C core algorithm, which may require a high update frequency.

A control algorithm used in the ER-CB-MP3C 51 may follow the schematic block diagram explained with respect to Figure 3.

Fig. 3 shows a schematic medium-level block diagram of the controller 42 for controlling the electrical converter 10, according to an embodiment of the invention. The control algorithm illustrated by figure 3 may be in many parts equivalent to the algorithm of CB-MP3C described in the not yet published patent application EP 22 172 910.6. Therefore, the following description focusses on the new aspects of the present invention with respect to the invention described in EP 22 172 910.6 and the description of identical components and/or functions may be omitted in order to not obscure the core of the present invention.

The control algorithm may be executed with the time period $T_c$ or $T_c/2$, whereas $T_c$ may be a carrier period of the main stage 12 (3LNPC) for an equivalent carrier-based PWM scheme. If the main stage 12 uses a carrier frequency of 500Hz, the execution period could be 2ms or 1ms. The corresponding computational steps are described in the following.

Based on a flux reference angle provided by an outer loop torque controller, a voltage reference signal $V_{ref,abc}$ for the next modulation period $T_c$ (or $T_c/2$) is calculated. The voltage reference signal $V_{ref,abc}$ may be vector-valued. This may be done, e.g., by rotating the stator flux reference angle by 90° and scaling the length of the voltage vector with the speed (in case for operation with constant flux reference). For field-weakening, the magnitude of the voltage reference signal $V_{ref,abc}$ may have to be further scaled. To compensate the delay of the pulse width modulation method used below, the angle may be further rotated by an equivalent angle corresponding to $T_c/2$ (or $T_c/4$). The voltage reference signal $V_{ref,abc}$ may further include a common mode voltage signal to balance the neutral potential of the main stage 12 and/or to further improve the voltage quality with space vector equivalent modulation.

The cell capacitor voltages $V_{afc,bc}$ of the two still functional filter cells, e.g the filter cells 30b, 30c in phase b and c, may be measured individually and optionally processed with a low pass filter 48, $G_{LP}$, wherein it is assumed that the filter cell 30a has failed.

In an active filter cell balancer 50, the differences of the cell capacitor voltages $V_{afc,bc}$ compared to a cell reference voltage may be processed with P- or PI-controllers. Output signals of the filter cell balancer 50 may be interpreted as non-zero first average balancing voltage $V_{bal,bc}$ that need to be injected by the remaining filter cells 30b, 30c in order to accumulate charge in the corresponding cell capacitors 38 of the corresponding remaining filter cells 30b, 30c, and consequently charge or discharge the corresponding cell capacitor 38. If the cell voltage matches the corresponding reference voltage, an average output voltage created by the remaining filter cells 30b, 30c over one modulation period $T_c$ (or $T_c/2$) may be zero and the entire volt-seconds over a modulation period may be provided by the main stage 12. In the balancer 50, the signs of the phase currents, in particular the bc-phase currents $I_{ph,bc}$ of the two remaining filter cells 30b, 30c, need to be accounted for, such that the average balancing voltage for the remaining filter cells 30b, 30c may drive the cell voltage in the correct direction, i.e. the P- or PI-controller outputs may be multiplied with the sign of the corresponding bc-phase currents $I_{ph,bc}$. The first average balancing voltage $V_{bal,bc}$ of the balancer 50 may be combined with a second average balancing voltage $V_{bal,a}$, which is a zero signal in the present example, for the bypassed faulty filter cell 30a provided by a second block 57, and may be multiplexed into a third average balancing voltage $V_{bal,abc}$, e.g. by a multiplexer 59. The components of the third average balancing voltage $V_{bal,abc}$ may be used as references for a filter cell voltage average adjuster 52.

In block 54, a differential mode (DM) component 55 of the third average balancing voltage $V_{bal,abc}$ may be determined. The differential mode component 55 of the third average balancing voltage $V_{bal,abc}$ may be subtracted from the voltage reference signal $V_{ref,abc}$ to form a compensated voltage reference signal 56. This may be done to compensate an additional voltage injected by the remaining filter cells 30b, 30c caused by the adjustments generated by adjuster 52, as explained in EP 22 172 910.6, in the chapter "Filter cell average voltage adjuster 52". Consequently, the sum of the output voltage of the main stage 12, i.e. the intermediate voltage, and the output voltage of the filter cell stage 14 may be unchanged and there may be no impact on the flux trajectory and torque control.

In the main stage modulator 58, the main stage pulse pattern 60 over the next modulation period $T_c$ (or $T_c/2$) for the main stage 12 may be calculated from the compensated voltage reference signal 56, e.g. as explained in EP 22 172 910.6 in the chapter "Main stage pulse width modulator 58", and in the chapter "pulse width modulation" of EP 3 729 637 A1.

A differential mode signal may 61 be determined in a third block 62 from voltage pulses created by the main stage 12, which are encoded in the main stage pulse pattern 60, e.g., in a similar way as the differential mode component 55 is determined from the third average balancing voltage $V_{bal,abc}$. A cell output voltage reference signal 64, which corresponds to a difference between the compensated reference voltage reference signal 56 and the differential mode signal 61, may be formed. The reference signals for the remaining filter cells 30b, 30c may be determined from the phase components of the cell output voltage reference signal 64.

In particular, an error distributor 65 may be configured for distributing a voltage error which corresponds to the voltage difference encoded in the cell output voltage reference signal 64 to the two remaining filter cells 30b, 30c, wherein the redistributed voltages may be provided as an input to a filter stage modulator 66 for determining an initial cell pulse pattern 68. In particular, the input signal for the filter stage modulator 66 may be determined by the error distributor 65 in a special way that considers the bypassed faulty filter cell 30a and redistributes the voltage error to the two remaining functional filter cells 30b, 30c.

First, the reference voltages for all of the filter cells 30a, 30b, 30c may be calculated under the assumption that all filter cells 30a, 30b, 30c are working properly. In this case, a cell output voltage reference signal $V_{ref,af,k}$ for the filter cell 30a, 30b, 30c in phase k may be determined by

$$V_{ref,af,k}(t_i) = V_{ref,npc,k} - V_{npc,DM,k}(t_i)$$

with k being a, b, or c, with $V_{ref,npc,k}$ being the compensated voltage reference signal, with $V_{npc,DM,k}$ being the differential mode voltage component of the main stage pulse pattern at respective time instant ti of switching position changes, and with ti being the points in time of every switching position change of the main stage pulse pattern 60 in any phase, with i being a natural number.

The cell output voltage reference signal $V_{ref,af,k}$ may be piecewise constant and may change at the time points ti within the modulation period $T_c$ (or $T_c/2$). They may be calculated with the actual differential mode voltage component $V_{npc,DM,k}$ for each switching position of the main stage 12 for each switching time in every phase.

$$V_{npc,DM,k}(t_i) = V_{npc,k}(t_i) - \frac{1}{3}\left(V_{npc,a}(t_i) + V_{npc,b}(t_i) + V_{npc,c}(t_i)\right)$$

with $V_{npc,k}$ being the main stage pulse pattern voltage in phase k, with $V_{npc,a}$ being the main stage pulse pattern voltage in phase a, with $V_{npc,b}$ being the main stage pulse pattern voltage in phase b, with $V_{npc,c}$ being the main stage pulse pattern voltage in phase c, at respective time instants ti of switching position changes. For every switching position change in any phase of the main stage 12, a new entry of the cell output voltage reference signal $V_{ref,af,k}$ with time ti may be created.

Now, the cell output voltage reference signal $V_{ref,af,k}$ in the abc-frame may be redistributed to the remaining functional filter cells 30b, 30c by using a transformation approach. First, the cell output voltage reference signal $V_{ref,af,k}$ in the abc-frame may be transformed to an orthogonal, stationary reference frame ($\alpha\beta$-frame).

$$\begin{bmatrix} v_{ref,af,\alpha}(t_i) \\ v_{ref,af,\beta}(t_i) \end{bmatrix} = \frac{2}{3} \cdot \begin{bmatrix} 1 & -\frac{1}{2} & -\frac{1}{2} \\ 0 & \frac{\sqrt{3}}{2} & -\frac{\sqrt{3}}{2} \end{bmatrix} \cdot \begin{bmatrix} v_{ref,af,a}(t_i) \\ v_{ref,af,b}(t_i) \\ v_{ref,af,c}(t_i) \end{bmatrix}$$

In a second step, the voltage error may be back-transformed to the abc-frame assuming that one cell voltage is zero:

$$\begin{bmatrix} v_{ref,af,\alpha} \\ v_{ref,af,\beta} \end{bmatrix} = \frac{2}{3} \cdot \begin{bmatrix} 1 & -\frac{1}{2} & -\frac{1}{2} \\ 0 & \frac{\sqrt{3}}{2} & -\frac{\sqrt{3}}{2} \end{bmatrix} \cdot \begin{bmatrix} 0 \\ v_{ref,af,b}^* \\ v_{ref,af,c}^* \end{bmatrix}$$
$$= \frac{1}{3} \cdot \begin{bmatrix} -1 & -1 \\ \sqrt{3} & -\sqrt{3} \end{bmatrix} \cdot \begin{bmatrix} v_{ref,af,b}^* \\ v_{ref,af,c}^* \end{bmatrix} = K_{bc} \cdot \begin{bmatrix} v_{ref,af,b}^* \\ v_{ref,af,c}^* \end{bmatrix}$$

Under the assumption of the present example that the faulty filter cell 30a in phase a is bypassed one gets

$$\begin{bmatrix} v_{ref,af,b}^*(t_i) \\ v_{ref,af,c}^*(t_i) \end{bmatrix} = K_{bc}^{-1} \cdot \begin{bmatrix} v_{ref,af,\alpha}(t_i) \\ v_{ref,af,\beta}(t_i) \end{bmatrix}$$

with

$$K_{bc}^{-1} = \frac{1}{2} \cdot \begin{bmatrix} -3 & \sqrt{3} \\ -3 & -\sqrt{3} \end{bmatrix} \cdot \begin{bmatrix} v_{ref,af,\alpha} \\ v_{ref,af,\beta} \end{bmatrix}$$

being the reduced back-transformation matrix, and with redistributed reference voltages $v^*_{ref,af,b}$, $v^*_{ref,af,b}$ being encoded in a new cell output voltage reference signal for the remaining filter cells 30b, 30c in the phases b and, respectively, c. The same principal may easily be transferred to a case where one of the filter cells 30b, 30c is the faulty one.

The phase components of the reference voltage signal may be represented as arrays of voltage and time entries over $T_c$ (or $T_c/2$). The same applies to the phase components of the voltage reference signal $V_{ref,abc}$, for the compensated voltage reference signal 56, and to the main stage pulse pattern 60.

In the filter cell stage modulator 66, the cell output voltage reference signals $V_{ref,af,k}$ for the filter cell stage 14 may be used to determine an initial cell pulse pattern 68 of the filter cell stage 14 over the next modulation period $T_c$ (or $T_c/2$), e.g. as explained in EP 22 172 910.6 in the chapter "Filter cell stage pulse width modulator 66", wherein only the pulse patterns for the remaining filter cells 30b, 30c may be calculated, because the pulse pattern for the bypassed filter cell 30a may be zero over the complete modulation period. The initial cell pulse pattern 68 may be composed of switching instants for the two remaining phases, wherein each switching instant comprises a switching state and a switching time. The switching times for the initial cell pulse pattern 68 may be provided over next modulation period of the main stage 12. The same applies for a final cell pulse pattern 70. The initial cell pulse pattern 68 may be adjusted to form the final cell pulse pattern 70, e.g. as described in EP 22 172 910.6.

In block 72, the main stage pulse pattern 60 for the main stage 12 and the cell pulse pattern 70 for the filter cell stage 14 may be stored in a look-up table. There, the pulse patterns 60, 70 may be available for the next modulation period $T_c$ (or $T_c/2$) for the model predictive controller 46.

In block 74, the flux reference trajectory 76 corresponding to the main stage pulse pattern 60 and the cell pulse pattern 70 may be calculated, e.g. as described in EP 22 172 910.6 in chapter "Flux trajectory calculation block 74".

With pulse width modulation, at the beginning of the modulation period $T_c$ (or $T_c/2$), the flux reference trajectory 76 always crosses a circular reference trajectory 78. Therefore, the circular reference trajectory 78 corresponding to the stator flux reference angle at the beginning of the modulation period $T_c$ (or $T_c/2$) may be used as a starting point to calculate the flux reference trajectory 76. The rest of the flux reference trajectory 76 over the modulation period $T_c$ (or $T_c/2$) may be obtained with piecewise integration of the combined pulse patterns 60, 70 of the main stage 12 and the filter cell stage 14.

In block 80, the flux reference trajectory 76 may be stored in a look-up table. There, the flux reference trajectory 76 may be available for the next modulation period $T_c$ (or $T_c/2$) for the model predictive controller 46.

It is also possible that the pattern determination controller 44 calculates the pulse patterns 60, 70 and the flux reference trajectory 76 for the over-next modulation period $T_c$ (or $T_c/2$). This may simplify an implementation on a microcontroller because the method may be run in a lower-priority interrupt and may compute the patterns 60, 70 for the over-next modulation period while the model predictive controller 46 works on the active modulation period that has been computed previously.

The model predictive controller 46 may comprise an MP3C (model predictive pulse pattern control) core 82, which may execute the pulse patterns 60, 70 and controls the stator flux to follow the flux reference trajectory 76. For this, the MP3C core 82 may read the pulse patterns 60, 70 and the flux reference trajectory 76 from the look-up tables and may receive an estimated flux 84, which may be calculated from measurements in the electrical converter 10.

The model predictive control part as well as the model predictive control may be performed like in EP 2 469 692 A1, which is incorporated by reference. Also, in the chapter "pattern controller" of EP 3 729 637 A1, which is incorporated by reference, model predictive control of pulse patterns created based on pulse width modulation is described.

In general, the tasks and/or method steps of the model predictive control part may be performed several times during modulation period $T_c$ (or $T_c/2$).

The main stage pulse pattern 60 and the cell pulse pattern 70 may be modified by moving at least one transition time and/or time point of a switching instant, such that a flux error determined from a difference between the estimated flux 84 of the electrical converter 10 and the reference flux trajectory 76 is minimized, e.g. as described in EP 22 172 910.6. To this end, an objective function is used, into which the transition times and/or time points of the switching instants are input.

At least a next switching instant from the modified main stage pulse pattern 60 and the modified cell pulse pattern 70 may then be applied to the electrical converter 10, wherein the faulty filter cell 30a is bypassed by the corresponding bypass switch 39. This may mean that the switches of the main stage 12 and the filter cell stage 14 are switched at the transition time of the next switching instant to the switching position as indicated by the next switching instant.

The circular flux reference trajectory 78 may be calculated in block 86. In case there is a torque step or any other disturbance that leads to a stator flux reference angle which is outside of the angle range corresponding to the precomputed modulation period $T_c$ (or $T_c/2$), the flux reference trajectory 76 is skipped and the circular flux reference trajectory 78 at the stator flux reference angle is used instead.

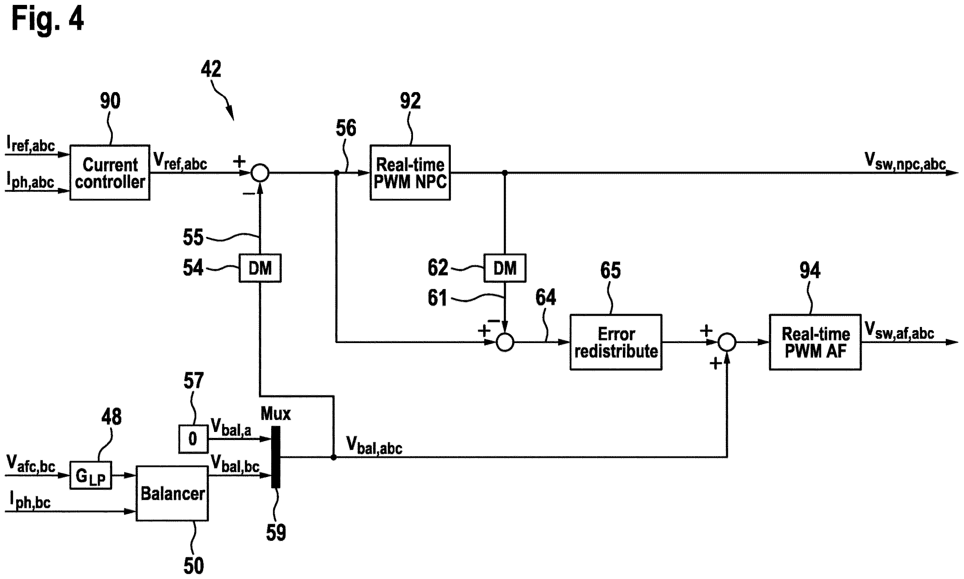

Fig. 4 shows a schematic medium-level block diagram of another controller 42 for controlling the electrical converter 10, according to an embodiment of the invention. From figure 4 it may be seen that the method for controlling the electrical converter 10 explained with respect to figures 2 and 3 may also be implemented with a standard current control method, e.g. in synchronous dq-reference frame and real-time PWM. An important feature is again the error distributor 65 which may be activated in case one of the filter cells 30a, 30b, 30c is bypassed and the filter cell balancer 50.

In this case, the switching signals for all the switches of the 3L(A)NPC and the filter cells 30a, 30b, 30c may not be calculated ahead of time, but instantaneously with real-time PWM modulator blocks 92, 94, that may apply a triangular carrier modulation. Furthermore, instead of the stator flux, typically the currents may be directly controlled, e.g. in a synchronous orthogonal dq-reference frame, or in any other reference frame, e.g. as described in WO 2018 029 303 A1 and EP 3 709 497 A1.

With respect to figure 4, phase output currents $I_{ph,abc}$ may be measured and controlled to follow current references $I_{ref,abc}$. For this purpose, these two signals may be processed with a current controller 90, which may carry out any kind of a known standard current control method, e.g. proportional (P), proportional-integral (PI), proportional-integral-derivative (PID), or proportional-resonant (PR) type control in an arbitrary reference frame, e.g. the three-phase stationary abc-reference frame, the stationary orthogonal $\alpha\beta$-reference frame, or the synchronous dq-reference frame. The current controller 90 may ultimately compute the voltage reference signal $V_{ref,abc}$ in real-time.

In the following, it is again assumed that the filter cell 30a has failed and that the filter cells 30b, 30c are remaining and as such working properly. However, the concept explained in the following may be easily transferred to a case in which one of the other filter cells 30b, 30c fails.

The first average balancing voltage $V_{bal,bc}$ for the remaining two filter cells 30b, 30c may be computed in real-time from the difference of the cell voltage reference and the actual measured cell capacitor voltages $V_{afc,bc}$ of the remaining two filter cells 30b, 30c, which may be filtered with the low-pass filter 48, wherein the difference may be multiplied with the current sign of the bc-phase current $I_{ph,bc}$ of the remaining two filter cells 30b, 30c to achieve cell voltage balancing in the correct direction and it may be processed with a proportional (P) or proportional-integral (PI) controller in order to control the actual measured cell voltages towards the cell voltage reference.

The first average balancing voltage $V_{bal,bc}$ in real-time for the two remaining filter cells 30b, 30c may be multiplexed with the zero signal of the second average balancing voltage $V_{bal,a}$ for the bypassed filter cell 30a to form the three-phase third average balancing voltage $V_{bal,abc}$.

The differential mode (DM) components 55 of the three-phase third average balancing voltage $V_{bal,abc}$ in real-time may be subtracted from the voltage reference signals $V_{ref,abc}$ to form the compensated voltage reference signal 56 in real-time.

The compensated reference signal 56 in real-time may be processed with a first real-time PWM modulation block 92 of the above mentioned real-time PWM modulator blocks 92, 94, wherein the first real-time PWM modulation block 92 may apply a triangular carrier modulation, to generate the three-phase switching signals for the main stage 12 and corresponding main stage output voltages $V_{sw,npc,abc}$.

The cell output voltage reference signal 64 in real-time may be determined form the difference of the compensated voltage reference signal 56 and the differential mode (DM) signal 61 determined from the main stage output voltages $V_{sw,npc,abc}$.

Subsequently, the cell output voltage reference signals 64 in real-time may be redistributed to the two remaining filter cells 30b, 30c by the error distributor 65 that may work in the same way as described above with respect to figure 3, but with the real-time signals.

The three phase third balancing voltage signals $V_{bal,abc}$ may be added to the redistributed reference voltages $v^*_{ref,af,b}$, $v^*_{ref,af,b}$ to form reference signals for a second real-time PWM modulator block 94 of the above mentioned real-time PWM modulator blocks 92, 94, wherein the second real-time PWM modulator block 94 may apply any known triangular carrier modulation. As such, the second real-time PWM modulator block 94 may create switching signals for the filter stage 14, e.g., in the form of filter stage output voltages $V_{sw,af,abc}$.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| 10 | electrical converter |
| 12 | main stage |
| 14 | filter stage |
| 16 | electrical load |
| 18 | rectifier |
| 20 | DC link |
| 22 | main converter |
| 23 | main half-bridge |
| 24 | main output |
| 26 | clamp circuit and/or main DC link |
| 28 | clamp inductor and/or resistor |
| 30a | first filter cell |
| 30b | second filter cell |
| 30c | third filter cell |
| 32 | passive filter |
| 34 | converter output |
| 36 | cell half-bridge |
| 38 | cell capacitor |
| 39 | bypass switch |
| 40 | cell output |
| 41 | second switch |
| 42 | controller |
| 43 | OPP-based MP3C modulation scheme |
| 44 | pattern determination controller |
| 45 | carrier-based MP3C modulation scheme |
| 46 | model predictive controller |
| 47 | first decision block |
| 48 | low pass filter |
| 49 | first switch |
| 50 | filter cell balancer |
| 51 | error redistribution carrier-based MP3C modulation scheme |
| 52 | adjuster |
| 53 | second decision block |
| 54 | first block |
| 55 | differential mode component |
| 56 | compensated voltage reference signal |
| 57 | second block |
| 58 | main stage modulator |
| 59 | multiplexer |
| 60 | main stage pulse pattern |
| 61 | differential mode signal |
| 62 | third block |
| 64 | cell output voltage reference signal |
| 65 | error distributor |
| 66 | filter stage modulator |
| 68 | initial cell pulse pattern |
| 70 | final cell pulse pattern |
| 74 | fourth block |
| 76 | flux reference trajectory |
| 78 | circular reference trajectory |

| | |
|---|---|
| 80 | fifth block |
| 82 | MP3C core |
| 84 | estimated flux |
| 86 | sixth block |
| 90 | current controller |
| 92 | first real-time PWM modulator block |
| 94 | first real-time PWM modulator block |

| | |
|---|---|
| $V_{ref,abc}$ | voltage reference signal |
| $V_{afc,bc}$ | cell capacitor voltages |
| $I_{ph,bc}$ | bc-phase currents |
| $V_{bal,bc}$ | first average balancing voltage |
| $V_{bal,a}$ | second average balancing voltage |
| $V_{bal,abc}$ | third average balancing voltage |
| $I_{ref,abc}$ | current references |
| $I_{ph,abc}$ | phase output currents |
| $V_{sw,npc,abc}$ | main stage output voltages |
| $V_{sw,af,abc}$ | filter stage output voltages |

**Claims**

1. A method for controlling an electrical converter (10), the electrical converter (10) comprising a main stage (12), with the main stage (12) being configured for converting a DC voltage into a three phase intermediate voltage and having three main outputs (24), one for each phase of the intermediate voltage, a filter cell stage (14) having three filter cells (30a, 30b, 30c) with each filter cell (30a, 30b, 30c) being coupled to a corresponding one of the three main outputs (24) and being configured for modifying the corresponding phase of the intermediate voltage, and three bypass switches (39) for bypassing the filter cells (30a, 30b, 30c), with each of the three bypass switches (39) being electrically coupled to a corresponding one of the three main outputs (24) and to a cell output (40) of the corresponding filter cell (30a, 30b, 30c), the method comprising the steps of:

   determining a main stage pulse pattern (60) for the main stage (12), wherein the main stage pulse pattern (60) is determined depending on a voltage reference signal ($V_{ref,abc}$) for the output voltage and wherein the main stage pulse pattern (60) comprises switching instants for the main stage (12) over a next modulation period of the main stage (12);
   determining a cell pulse pattern for the filter cell stage (14), wherein the cell pulse pattern is determined from a cell output voltage reference signal (64), which is determined from the voltage reference signal ($V_{ref,abc}$) and a main stage voltage signal (61) determined from the main stage pulse pattern (60), and wherein the cell pulse pattern comprises switching instants for the three filter cells (30a, 30b, 30c) over the next modulation period;
   applying at least a next switching instant determined from the main stage pulse pattern (60) and the cell pulse pattern to the electrical converter (10), when all of the filter cells (30a, 30b, 30c) are working properly;
   applying at least a next switching instant determined from the main stage pulse pattern (60) and a modified cell pulse pattern (70) to the electrical converter (10), when one of the filter cells (30a, 30b, 30c) fails, wherein

      the failed filter cell (30a) is bypassed by activating the corresponding bypass switch (39),
      the modified cell pulse pattern (70) is determined under the assumption that a cell voltage provided by the failed filter cell (30a) is zero, and
      the intermediate voltage is modified by the two remaining filter cells (30b, 30c) depending on the modified cell pulse pattern (70) in order to provide the output voltage of the electrical converter (10).

2. The method of claim 1, wherein

   the cell pulse pattern for the filter cell stage (14) is determined from the cell output voltage reference signal (64) by distributing the cell output voltage reference signal (64) to the three filter cells (30a, 30b, 30c), when all three filter cells are working properly; and
   the modified cell pulse pattern (70) for the filter cell stage (14) is determined from the cell output voltage reference signal (64) by distributing the cell output voltage reference signal (64) to the two remaining filter cells (30b, 30c), when the filter cell (30a) fails.

3. Method in accordance with claim 2, wherein the cell output voltage reference signal (64) is distributed to the two remaining filter cells (30b, 30c) by

determining, under the assumption that all three filter cells (30a, 30b, 30c) work properly, three reference cell output voltages ($v_{ref,af,a}$, $v_{ref,af,b}$, $v_{ref,af,c}$) to be provided by the corresponding filter cells (30a, 30b, 30c) depending on the cell output voltage reference signal (64), wherein the three reference cell output voltages ($v_{ref,af,a}$, $v_{ref,af,b}$, $v_{ref,af,c}$) are determined in the form of a three-dimensional vector;

determining two auxiliary reference cell output voltages ($v_{ref,af,\alpha}$, $v_{ref,af,\beta}$) for the two remaining filter cells (30b, 30c) depending on the reference cell output voltages ($v_{ref,af,a}$, $v_{ref,af,b}$, $v_{ref,af,c}$) by transforming the three-dimensional vector into a two-dimensional auxiliary vector, wherein the components of the two-dimensional auxiliary vector correspond to the two auxiliary reference cell output voltages ($v_{ref,af,\alpha}$, $v_{ref,af,\beta}$);

determining a back-transformation matrix by back-transforming the auxiliary vector under the assumption that a cell output voltage of the failed filter cell (30a) is zero;

determining two redistributed reference cell output voltages ($v^*_{ref,af,b}$, $v^*_{ref,af,b}$) depending on the back-transformation matrix and the two auxiliary reference cell output voltages ($v_{ref,af,\alpha}$, $v_{ref,af,\beta}$); and

determining the modified cell pulse pattern (70) depending on the redistributed reference cell output voltages ($v^*_{ref,af,b}$, $v^*_{ref,af,b}$).

4. Method in accordance with claim 3, wherein

the three-dimensional vector is determined in an abc-frame; and/or
the two-dimension auxiliary vector is determined in an $\alpha\beta$-frame; and/or
the redistributed reference cell output voltages ($v^*_{ref,af,b}$, $v^*_{ref,af,b}$) are determined in form of a two-dimensional redistributed vector and the redistributed vector is provided in the $\alpha\beta$-frame.

5. Method in accordance with one of the preceding claims, wherein

the main stage (12) and/or the filter cells (30a, 30b, 30c) are operated in accordance with an OPP-based MP3C modulation scheme, a carrier-based MP3C modulation scheme, or a PWM modulation scheme, when all three filter cells (30a, 30b, 30c) work properly; and/or
the main stage (12) and/or the remaining filter cells (30b, 30c) are operated in accordance with a carrier-based MP3C modulation scheme, when the filter cell (30a) has failed.

6. Method in accordance with one of the preceding claims, wherein

, when all of the filter cells (30a, 30b, 30c) work properly, pulse patterns (60) for the main stage (12) and/or for the three filter cells (30a, 30b, 30c) are determined offline in advance and are loaded into one or more look-up tables during the operation of the electrical converter (10); and/or
, when the filter cell (30a) has failed, the pulse patterns (60, 70) for the main stage (12) and/or for the remaining filter cells (30b, 30c) are determined online for the next modulation period only and are loaded into the one or more look-up tables during the operation of the electrical converter (10).

7. Method in accordance with one of the preceding claims, wherein
a switching frequency of the main stage (12) is increased, when the filter cell (30a) has failed.

8. Method in accordance with claims 6 and 7, wherein
an update rate for updating the look-up tables is reduced when the filter cell (30a) has failed.

9. Method in accordance with claim 8, wherein
the update rate is reduced to a modulation period of the main stage (12) or to half the modulation period of the main stage (12).

10. A computer program for controlling an electrical converter (10), which, when being executed by a processor, is adapted to carry out the steps of the method of one of the previous claims.

11. A computer-readable medium, in which a computer program according to claim 10 is stored.

12. A controller (42) for controlling an electrical converter (10), the controller comprising a processor configured for carrying out the method of one of claims 1 to 9 and a memory for storing a main stage pulse pattern (60) for controlling a main stage (12) of the electrical converter (10), a cell pulse pattern for controlling a filter cell stage (14) of the electrical converter (10), when all of the filter cells (30a, 30b, 30c) are working properly, and a modified cell pulse pattern (70) for controlling the filter cell stage (14), when one of the filter cells (30a, 30b, 30c) fails, wherein the memory is communicatively coupled to the processor.

13. An electrical converter (10), comprising:

a main stage (12) being configured for converting a DC voltage into a three-phase intermediate voltage and having three main outputs (24), one for each phase of the intermediate voltage;
a filter cell stage (14) having three filter cells (30a, 30b, 30c) with each filter cell (30a, 30b, 30c) being coupled to a corresponding one of the three main outputs (24) and being configured for modifying the corresponding phase of the intermediate voltage;
three bypass switches (39) for bypassing the filter cells (30a, 30b, 30c), with each of the three bypass switches (39) being electrically coupled to a corresponding one of the three main outputs (24) and to a cell output (40) of the corresponding filter cell (30a, 30b, 30c); and
a controller (42) according to claim 12.

Fig. 1

EP 4 451 530 A1

Fig. 2

**Fig. 3**

EP 4 451 530 A1

Fig. 4

Europäisches
Patentamt

European
Patent Office

Office européen
des brevets

# EUROPEAN SEARCH REPORT

**Application Number**

EP 23 16 8626

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/029869 A1 (MITSUBISHI ELECTRIC CORP [JP]) 10 February 2022 (2022-02-10) * abstract; figures 1-7 * & US 2023/261563 A1 (FUJIWARA KENJI [JP] ET AL) 17 August 2023 (2023-08-17) * paragraph [0039] – paragraph [0041]; figures 1-7 * * paragraph [0049] * * paragraph [0067] – paragraph [0071] * ----- | 1-13 | INV. H02M1/00 H02M1/32 H02M7/487 H02M7/49 H02M7/5395 H02M1/12 |
| X | US 2022/255457 A1 (KOJIMA TETSUYA [JP] ET AL) 11 August 2022 (2022-08-11) * figures 11,12 * * paragraph [0078] – paragraph [0083] * ----- | 1,10-13 | |

TECHNICAL FIELDS SEARCHED (IPC)

H02M

The present search report has been drawn up for all claims

| Place of search | Date of completion of the search | Examiner |
|---|---|---|
| The Hague | 25 September 2023 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 16 8626**

This annex lists the patent family members relating to the patent documents cited in the above-mentioned European search report.
The members are as contained in the European Patent Office EDP file on
The European Patent Office is in no way liable for these particulars which are merely given for the purpose of information.

**25-09-2023**

| Patent document cited in search report | | Publication date | Patent family member(s) | | Publication date |
|---|---|---|---|---|---|
| WO 2022029869 | A1 | 10-02-2022 | EP | 4195491 A1 | 14-06-2023 |
| | | | JP | 7305053 B2 | 07-07-2023 |
| | | | JP WO2022029869 A1 | | 10-02-2022 |
| | | | US | 2023261563 A1 | 17-08-2023 |
| | | | WO | 2022029869 A1 | 10-02-2022 |
| US 2022255457 | A1 | 11-08-2022 | EP | 3993250 A1 | 04-05-2022 |
| | | | JP | 6682049 B1 | 15-04-2020 |
| | | | JP WO2020261384 A1 | | 13-09-2021 |
| | | | US | 2022255457 A1 | 11-08-2022 |
| | | | WO | 2020261384 A1 | 30-12-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22172910 A
- WO 2019137916 A1
- WO 2017013125 A1
- EP 22183835 A
- EP 3729637 A1
- EP 2469692 A1
- WO 2018029303 A1
- EP 3709497 A1